# EUROPEAN PATENT SPECIFICATION

(11) **EP 2 432 091 B1**
(45) Date of publication and mention of the grant of the patent: **03.08.2016**
(21) Application number: 10774904.6
(22) Date of filing: 11.05.2010
(51) Int. Cl.: H02G 3/08, B60R 16/02, H02G 3/16

(54) **BRACKET STRUCTURE OF ELECTRICAL CONNECTION BOX**
KLAMMERSTRUKTUR FÜR EINEN ELEKTRISCHEN ANSCHLUSSKASTEN
STRUCTURE DE PATTE DE FIXATION DE BOÎTE DE RACCORDEMENT ÉLECTRIQUE

(30) Priority: 14.05.2009 JP 2009117823
(43) Date of publication of application: 21.03.2012
(73) Proprietor: Yazaki Corporation, Minato-ku Tokyo 108-8333 (JP)
(72) Inventor: IKEHATA Eriko, Kakegawa-shi Shizuoka 437-1414 (JP)
(74) Representative: Grünecker Patent- und Rechtsanwälte PartG mbB
(86) International application number: PCT/JP2010/057947
(87) International publication number: WO 2010/131647

(56) References cited:
- EP-A1- 1 970 259
- EP-A2- 2 056 658
- WO-A1-2009/032019
- JP-A- H05 292 628
- JP-A- 2007 143 372
- JP-A- 2007 143 372
- JP-A- 2007 308 006
- JP-A- 2007 308 006
- JP-U- S55 153 825
- US-A- 4 098 423
- US-A- 5 243 134

## Description

### Technical Field

The present invention relates to a bracket structure in an electrical junction box, in which brackets are attached on front and back of a body of the electrical junction box, the brackets being brought into fitting engagement with each other upon attaching the brackets to the body.

### Background Art

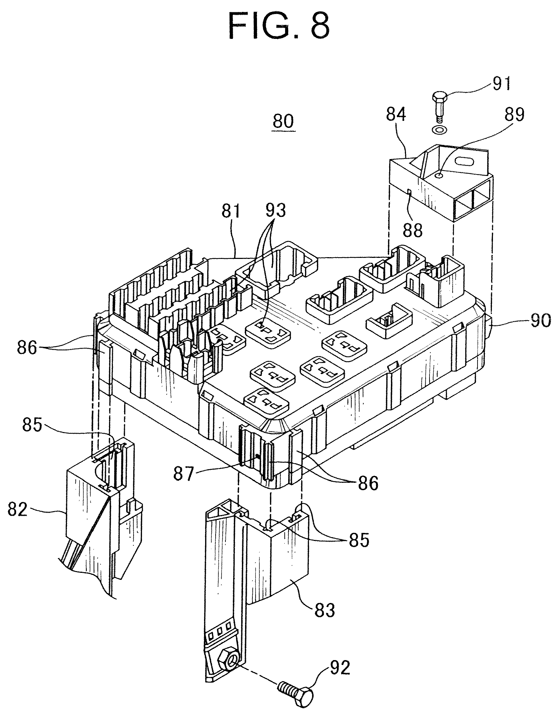

FIG. 8 illustrates an embodiment of a conventional bracket structure in a conventional electrical junction box (see the patent literature PTL 1).

In this structure, two brackets 82, 83 made of synthetic resin are secured to one side of an outer wall of a junction box body 81 made of insulating synthetic resin, and one bracket 84 is secured to the other side thereof so that the brackets 82 to 84 are secured to a body of a vehicle.

The brackets 82, 83 on the one side each include a vertically extending groove portion 85 and a projection, and are configured to be slidably brought into engagement with a guiding rib 86 and a projection 87 of the junction box body 81. The bracket 84 on the other side includes a horizontal groove and a vertical bolt-insertion hole 89 and is configured to be bolted by a bolt 91 to a horizontal protruding wall 90 in a state where the groove 88 is in engagement with a rib (not shown) of the horizontal protruding wall of the junction box body 81.

The brackets 82 to 84 are each secured to the vehicle body by a bolt 92. A wiring board may be accommodated in the junction box body 81, and electrical components such as a relay and a fuse, and/or a connector of an external wiring harness are inserted into the corresponding mounting part 93 on the front of the junction box body 81 for electrical connection to the wiring board.

Document EP 2 056 658 A2 relates to an electrical junction box (10) to be mounted on a motor vehicle includes a casing body (11) provided concentrically on a surface with a plurality of fuse mounting sections (12) and provided with a maintenance area (11B) for exchanging fuses to be attached to the fuse mounting sections, a cover body (20A) mounted on and coupled to the casing body at a non-maintenance area (11A) except the maintenance area (11B) on the casing body, and a maintenance cover (20B) separated from the cover body (20A) and mounted on the maintenance area (11B) on the casing body (11).

Document EP 2 056 658 A2 thus discloses a bracket structure in an electrical junction box, including: an upper cover configured to be attachable to one of a front and a back surface of a junction box body, a lower cover configured to be attachable to the other of the front and the back surface of the junction box body, and the upper cover and the lower cover are brought into fitting engagement with each other upon attaching the upper cover to the one of the upper and the lower surface and attaching the lower cover to the other of the upper and the lower surface of the junction box body, wherein the upper cover is adapted to be slid toward the one of the front and the back surface in one direction and brought into fitting engagement with the junction box body, and the lower cover is adapted to be slid toward the other of the front and the back surface in an other direction opposite to the one direction and brought into fitting engagement with the junction box body, and wherein the upper cover includes a first locking portion adapted to go beyond a first engagement portion of the junction box body in one direction such that the first locking portion of the upper cover is brought into engagement with the first engagement portion, and the lower cover includes a first locking portion adapted to go beyond a second engagement portion of the junction box body in the other direction such that the first locking portion of the lower cover is brought into engagement with the second engagement portion.

### Citation List

### Patent Literature

PTL 1: Japanese Patent Application Laid-Open Publication No. 11-113136 (FIG. 2)

### Summary of the Invention

### Technical Problem

In the above-described conventional structure of PTL1, in a case where the weight of the electrical junction box 80 is increased due to increase in number of wiring boards and electrical components inside of the junction box body 81, or in a case where the electronic control unit is attached in the junction box body 81, the brackets 82 to 84 provided on the lateral side may not be enough to effectively prevent oscillation (gatatsuki) of the electrical junction box 80 during the vehicle's driving.

Also, since the insertion directions of the two bracket 82, 83 on the one side with respect to the guiding rib 86 of the junction box body 81 are the same, oscillation easily occurs due to a vertical gap (overstroke) between (a) the projection of the brackets 82, 83 that have been placed in fitting engagement and (b) the projection 87 of the junction box body 81, on account of which it is not possible to effectively prevent the oscillation in the oscillation of the electrical junction box 80.

In view of the above-identified problem, an object of the present invention is to provide a bracket structure in an electrical junction box that ensures prevention of oscillation of the electrical junction box due to vibration of the vehicle.

### Solution to Problem

This object is solved by the subject matter of claim 1.

In order to attain the above-described objective, a first aspect of the present invention provides a bracket structure of an electrical junction box that comprises one bracket and an other bracket, the structure being characterized by the fact that the one bracket and the other bracket are adapted to be brought into fitting engagement with each other upon attaching the one bracket to one wide-width surface of the junction box body and attaching the other bracket to an other wide-width surface of the junction box body.

With the above-described configuration, the junction box body is sandwiched and supported by the two brackets in its thickness direction, and the two brackets are firmly secured by a bolt to a connection target, e.g., a vehicle body. Thus, it is made possible to reliably prevent oscillation of the junction box body in its thickness direction between the two brackets. The brackets are provided on and in contact with on the associated wide-width surfaces of the junction box body, which allows size and dimensions of the brackets to be selectable.

Furthermore, slide-engagement oscillation of the two brackets with respect to the junction box body, i.e., the oscillation of the two brackets with respect to the junction box body in one direction and the other direction in the thickness direction of the junction box body are balanced and absorbed, so that it is made possible to reliably prevent the oscillation of the junction box body.

The second locking portion of the other bracket and the second engagement portion of the one bracket are pressed against each other in the direction orthogonal to the fitting-engagement direction of the two brackets, without leaving a gap, by the elastic force of the flexible wall, i.e., the restoring force occurring when the curved flexible wall is pressed in a planar fashion, and thus the oscillation of the junction box body secured by the two brackets is also prevented in the orthogonal-to-thickness direction.

According to an aspect of the present invention, the one bracket further includes a protrusion and the other bracket further includes a protrusion, and the one bracket and the other bracket are each adapted to be pressed against and in contact with the one wide-width surface and the other wide-width surface of the junction box body via the respective protrusion.

With the above-described configuration, the protrusions of the two brackets are brought into intimate contact with the wide-width surface by the elasticity of the wall portion of the wide-width surfaces, through point contact, and without leaving a gap, and/or the protrusions as such are brought into contact with the associated wide-width surfaces by their compressive reaction force (elasticity due to flexibility) through point contact and without leaving a gap. Accordingly, it is made possible to prevent the oscillation of the junction box body in its thickness direction. Through synergy between the prevention of oscillation by the protrusion and the oscillation balancing and absorption by the two brackets, it is made possible to reliably prevent the oscillation of the junction box body.

### Advantageous Effects of the Invention

The invention has the following effects. Since the junction box body is sandwiched and secured in its thickness direction by the two brackets, it is made possible to reliably prevent the oscillation of the electrical junction box during vehicle's driving, so that damage to electrical and electronic components due to the oscillation is prevented, which increases the reliability of electrical connection of the electrical junction box. Also, the brackets are arranged on the front and back surfaces of the junction box body, respectively, which makes it possible to define shape and size of the brackets in accordance with the vehicle types. This allows common-use application of the junction box body, so that the general-purpose properties of the electrical junction box are enhanced.

Furthermore, the oscillation of the electrical junction box in the one direction and in the other direction is balanced and absorbed by each other, and the oscillation of the electrical junction box is reliably prevented.

The oscillations due to the overstroke of the locking portion of the one bracket with respect to the first engagement portion and the overstroke of the locking portion of the other bracket with respect to the second engagement portion are balanced and absorbed by each other, so that the oscillation of the electrical junction box is reliably prevented. Thus, the effects according to the first aspect are further increased.

The other bracket uniformly absorbs the oscillation at two points with respect to the junction box body and the one bracket, by virtue of which it is made possible to reliably prevent the oscillation of the electrical junction box when the width of the other bracket is wide.

The second locking portion of the other bracket and the second engagement portion of the one bracket are pressed against each other by the elasticity of the flexible wall, and accordingly it is also made possible to prevent the oscillation of the electrical junction box in the orthogonal-to-thickness direction. Also, the curved flexible wall allows the fitting-engagement portions of the brackets to be made more compact.

By virtue of the protrusions of the two brackets, the junction box body at point contact in the thickness direction without leaving a gap, and in synergy with the effects of the preceding aspects, it is made possible to reliably prevent the oscillation of the electrical junction box in the thickness direction.

### Brief Description of the Drawings

FIG. 1 is an exploded perspective view of a bracket structure in an electrical junction box according to one embodiment of the present invention;
FIG 2 is an exploded perspective view of the bracket structure in which one bracket is brought into fitting engagement with a junction box body;
FIG. 3 is a perspective view illustrating a state where the other bracket is brought into fitting engagement with the junction box body and the one bracket;
FIG. 4 is a perspective view illustrating the one bracket;
FIG. 5A is a plan view of a fitting-engagement portion of the one bracket;
FIG. 5B is a vertical cross-sectional view of the fitting-engagement portion of the one bracket;
FIG. 6 is a perspective view of the other bracket;
FIG. 7A is a vertical cross-sectional view of a fitting-engagement portion of the other bracket;
FIG. 7B is a plan view of the fitting-engagement portion of the other bracket; and
FIG 8 is an exploded perspective view illustrating one embodiment of a conventional bracket structure in the electrical junction box.

### Description of Exemplary Embodiment

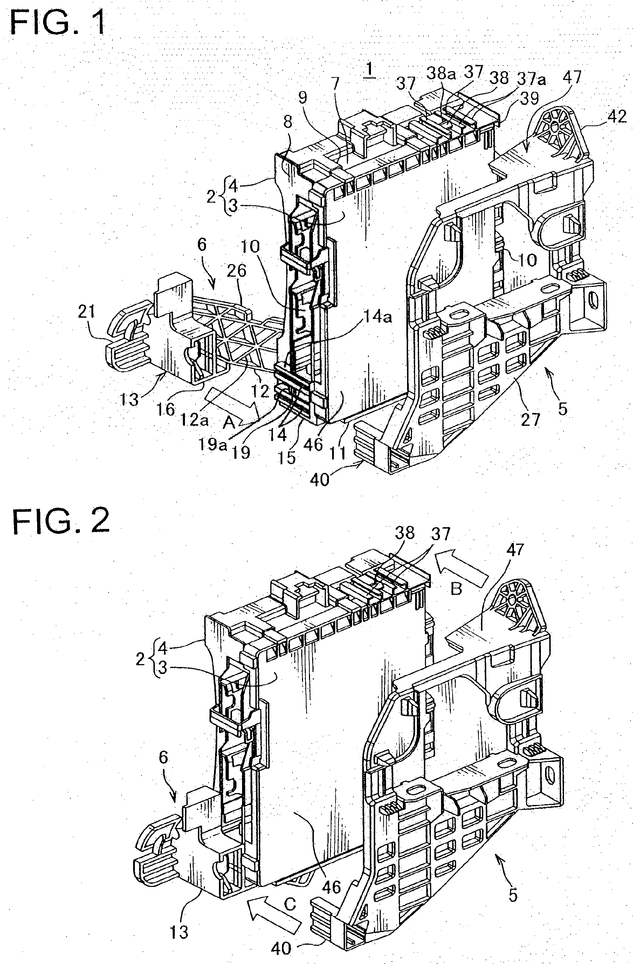

FIGS. 1 to 3 illustrate a bracket structure in an electrical junction box according to one embodiment of the present invention.

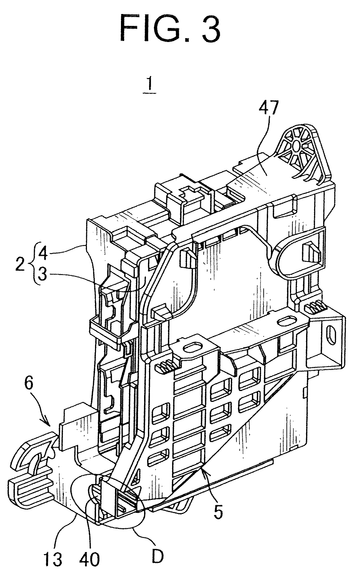

In this bracket structure in the electrical junction box, as shown in FIGS. 1 and 2, an upper bracket 5 and a lower bracket 6 are attached to a rectangular junction box body 2 in such a manner that the brackets 5, 6 are each brought into contact with a wide-width front surface and a wide-width back surface (i.e., an upper surface and a lower surface) of the body 2 in directions indicated by arrows A and B, respectively, and that the upper bracket 5 and the lower bracket 6 are brought into fitting engagement with each other as shown in FIG. 3. The upper bracket 5, the lower bracket 6, and the body 2 are made of insulating synthetic resin. The upper bracket 5 is adapted to be brought into fitting engagement with the lower bracket 6 in the direction indicated by the arrow C (FIG. 2) upon being brought into fitting engagement with the junction box body 2 in the direction indicated by the arrow B.

As shown in FIG. 1, the junction box body 2 comprises an upper cover 3 and a lower cover 4, and these covers 3, 4 are placed in locking engagement with each other via a not-shown locking element (e.g., engagement structure using a projection and a recess) provided inside of a raised portion 9 formed on front, rear, right, and left vertical wall portions 7, 8, etc.

Connector blocks 10 comprising a plurality of connectors are arranged on both sides (right and left sides) of the junction box body 2. Also, a fuse block 11, to which a plurality of blade-type fuses are connected, is arranged at the front side of the junction box body 2.

It should be noted that the directional expressions such as front, rear, right, and left are only employed for the sake of explanation.

Inside of the junction box body 2, there may be arranged a busbar

Inside of the junction box body 2, there may be arranged a busbar wiring board (not shown), and terminal portions of a busbar (not shown) serve as terminals (not shown) for connection of terminals of the connector block 10 and fuses thereto.

The electrical junction box 1 is constructed by the junction box body 2, the connector block 10, the fuse block 11, and the wiring board.

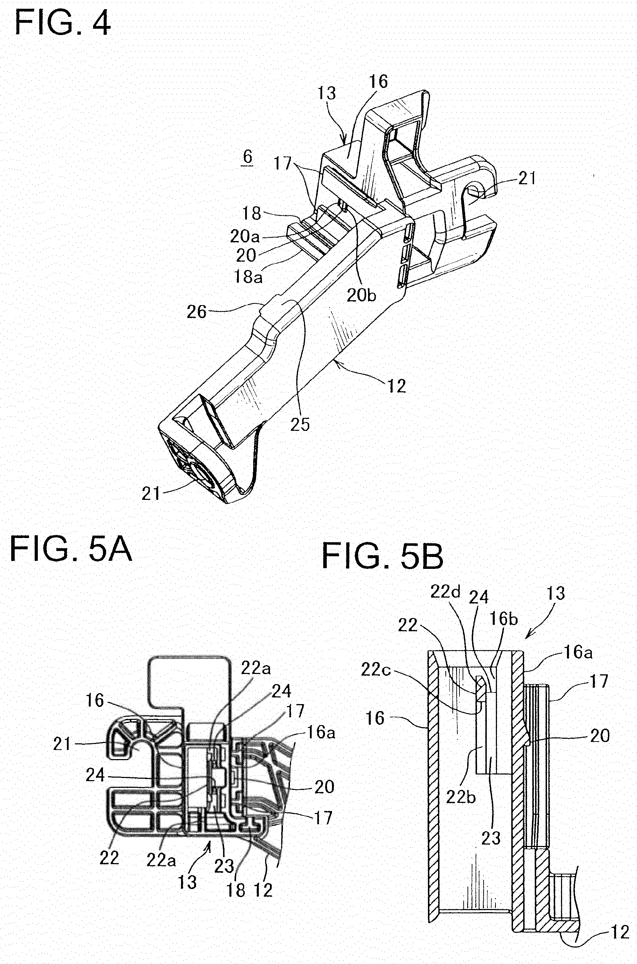

The small lower bracket 6 (the one bracket) is attached to the junction box body 2 in the direction indicated by the arrow A in such a manner that the lower bracket 6 is in contact with a horizontal lower wall surface of the junction box body 2. As shown in FIG. 4, the lower bracket 6 includes a horizontally long (narrow) plate-shaped portion 12 and a fitting-engagement portion 13 vertically protruding at one end of the plate-shaped portion 12. A plurality of ribs 12a (FIG. 1) are provided inside of the plate-shaped portion 12 for reinforcement thereof.

The fitting-engagement portion 13 includes a rectangular cylindrical wall 16 and slide-engagement portions 17, 18 (FIG. 4) provided on the outer surface of the wall 16, the slide-engagement portions 17, 18 each being adapted to be slidably brought into engagement with corresponding guiding portions 14, 15 of the junction box body 2 of FIG. 1 in the direction indicated by the arrow A, the guiding portion 14 being provided on the vertical one side wall 8 of the body 2 and the guiding portion 15 being provided on the front wall (not shown) of the body 2. Also, a portion adapted to be brought into fitting engagement with a fitting-engagement portion 40 of the larger upper bracket 5 (the other bracket) is provided inside of the rectangular cylindrical portion 40 of the fitting-engagement portion 13.

The guiding portions 14, 15 (FIG. 1) comprises a pair of cross-sectionally T-shaped guiding grooves 14 provided on the one side wall 8 and a cross-sectionally T-shaped guiding rib 15 provided on the front wall. The guiding grooves 14 are each provided in a pair of symmetrical ribs 14a, the one being cross-sectionally L-shaped and the other being inverted-L-shaped. A projection 19 (first engagement portion) for locking engagement (FIG. 1) is provided between the pair of guiding grooves 14, the projection 19 including in an upper portion thereof a generally horizontal locking surface 19a.

As shown in FIG. 4, a pair of slide-engagement ribs 17 (i.e., the slide-engagement portion) are provided on the outer surface of the cylindrical wall 16, the ribs 17 being vertically extending and cross-sectionally T-shaped. A projection 20 (locking portion) for locking engagement is provided between the pair of ribs 17, the projection 20 including an upper sloping surface 20a and a lower generally horizontal locking surface 20b. Adjacent the one rib 17, there is provided a cross-sectionally T-shaped slide-engagement groove 18 (slide-engagement portion) orthogonal to the outer surface of the cylindrical wall 16, the slide-engagement groove 18 being provided inside of the symmetrical pair of ribs 18a, the one being cross-sectionally L-shaped and the other being inverted-L-shaped.

The slide-engagement portions 17, 18 are each slidably brought into engagement with the associated guiding portions 14, 15 provided on the junction box body 2 of FIG. 1 upward in the direction indicated by the arrow A, in response to which the projection 20 goes beyond the projection 19 provided on the junction box body to enter into engagement with the corresponding vertically to the overstroke. The lower bracket 6 is adapted to be firmly secured to a vehicle body (a not-shown connection target) by means of a bolt (not shown) and via holes 21 provided in the end portion and the base portion of the plate-shaped portion 12 so that oscillation does not occur. Accordingly, the electrical junction box 1 may experience small upward oscillation with respect to the lower bracket 6 (in the absence of the upper bracket 5) due to the gap corresponding to the overstroke of the two projections 19, 20 that have been placed in the fitting engagement.

As shown in FIGS. 5A and 5B, the projection 20 and the slide-engagement rib 17 are provided on the outer surface of the one wall portion 16a of the cylindrical wall 16 of the lower bracket 6. Also, a gate-like vertical plate portion 22 for fitting engagement with the upper bracket (FIG. 1) is provided horizontally on an inner surface of the same one wall portion 16a. Both ends of the plate portion 22 in its width direction serve as guiding ribs 22a.

A vertical notched hole 22b is provided upward from the lower end and at the central portion of the plate portion 22 in its width direction. An upper end 22c of the notched hole 22b, i.e., the lower end of the connecting plate portion 22d (second engagement portion) at the central upper portion of the plate portion 22 serves as the locking surface.

The fitting-engagement portion 40 of the upper bracket 5 (FIG. 1) is inserted into and guided by the space 23 surrounded by the inner wall surface 16b of the cylindrical wall 16 and the plate portion 22. The plate portion 22 is connected to a pair of ribs 24 provided orthogonal to the one wall portion 16a.

As shown in FIGS. 1 and 4, one side wall 25 of the horizontal

As shown in FIGS. 1 and 4, one side wall 25 of the horizontal plate-shaped portion 12 of the lower bracket 6 includes a rectangular protrusion 26 substantially adjacent a midpoint in the longitudinal direction.

In the state where the lower bracket 6 is in place as shown in FIG. 2, the protrusion 26 is pressed against and in contact with a horizontal lower wall surface (a not-shown one surface) of the junction box body 2, causing the lower wall surface bent upward, and the protrusion 26 as such is bent (deformed) in a compression direction and is elastically brought into contact with the lower wall surface, so that downward oscillation of the electrical junction box 1 is prevented.

The plate-shaped portion 12 does not enter into contact with the lower wall surface except for via the protrusion 26.

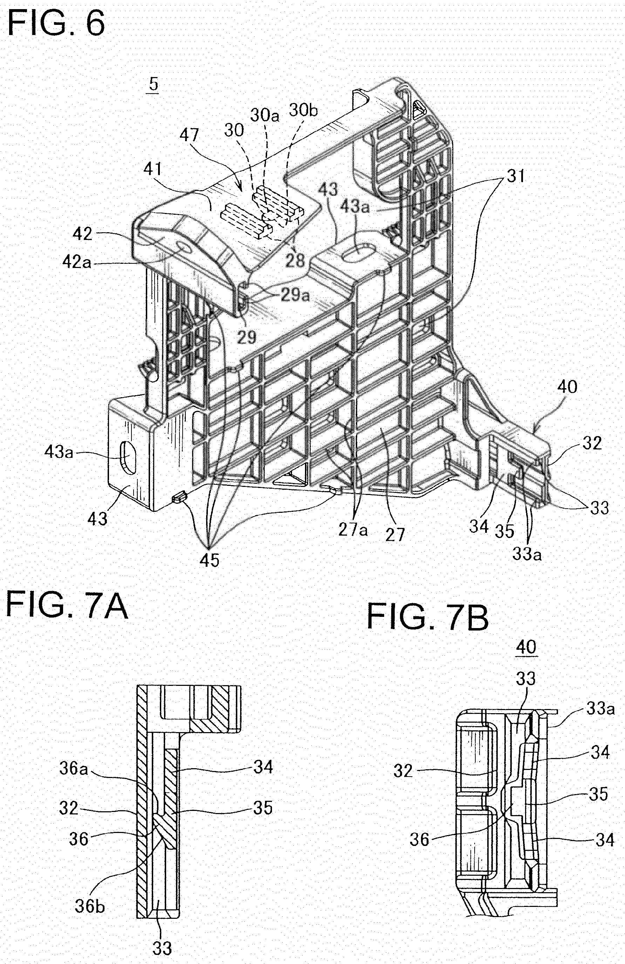

As shown in FIGS. 1 and 6, the upper bracket 5 includes (a) a horizontal wide-width plate-shaped portion 27, (b) a fitting-engagement portion 40 provided at an end of one side of the plate-shaped portion 27 and adapted to be brought into fitting engagement with the lower bracket 6, and (c) a slide-engagement portion 47 (see FIG. 6) provided at an end of the other side of the plate-shaped portion 27 to be at an opposing corner with respect to the fitting-engagement portion 40, and adapted to be slidably brought into engagement with the junction box body 2.

The plate-shaped portion 27 includes large and small holes 31 and a rib 27a on the inner side (lower surface) for reinforcement of the upper bracket 5.

As shown in FIGS. 6, 7A and 7B, the fitting-engagement portion 40 adapted to be brought into fitting engagement with the lower bracket 6 includes (a) a pair of slide-engagement grooves 33 (slide-engagement portion) provided inside of the ribs 33a provided at both sides of the vertical wall portion 32 in its width direction and in one piece therewith, the one rib 33a being cross-sectionally L-shaped and the other rib 33a being inverted-L-shaped, (b) an elongated, inwardly curved flexible wall 34 connected to the top portions of the two ribs 33a, (c) a flexible locking arm 35 downwardly extending from the central portion of the flexible wall 34, and (d) a locking projection 36 (second locking portion) provided on an inner surface of the locking arm 35. The projection 36 includes an upper generally horizontal locking surface 36a and a lower sloping surface 36b.

The guiding portions 22a in FIG. 5, which are provided at both sides in the width direction of the vertical plate portion 22 of the lower bracket 6, enters the pair of slide-engagement grooves 33 to be brought into engagement therewith, and the locking arm 35 is inserted into the space 23 along the connecting rib 24 and the plate portion 22 of the lower bracket 6, and the projection 36 goes beyond the connecting plate portion 22d at the upper central portion of the plate portion 22, and enters into engagement with the locking surface 22c at the upper end of the notched hole 22b. The locking arm 35 is elastically pressed against the connecting plate portion 22d of the plate portion 22 by the elastic force of the curved flexible wall 34, thereby preventing oscillation in the thickness direction (horizontal direction) of the locking arm 35.

As shown in FIG. 1, a pair of (or right and left) cross-sectionally T-shaped vertical guiding grooves (guiding portion) 37 are provided on the vertical rear wall 7 of the junction box body 2. The guiding groove 37 is provided between a pair of guiding ribs 37a, the one being cross-sectionally L-shaped and the other being inverted-L-shaped. A projection (second engagement portion) 38 for locking engagement is provided between the pair of guiding grooves 37. The projection 38 includes a lower generally horizontal locking surface 38a. Adjacent the guiding groove 37, a cross-sectionally T-shaped vertical guiding rib 39 (guiding portion) is provided at a region where the rear wall 7 intersects the other sidewall.

As shown in FIG. 6, the slide-engagement portion 47, which is adapted to be slidably brought into engagement with the junction box body 2, includes (a) a plate wall 41 vertically provided at a rear side of the upper bracket 5; (b) a pair of (or right and left) cross-sectionally T-shaped slide-engagement ribs 28 (slide-engagement portion9 provided on an inner surface of the plate wall 41; (c) a projection (locking portion)30 for locking engagement provided between the pair of ribs 28; and (d) a cross-sectionally T-shaped slide-engagement groove 29 (slide-engagement portion) on the other side and orthogonal to the plate wall 41.

The projection 30 includes an upper generally horizontal locking surface 30a and a lower sloping surface 30b. The guiding groove 29 is provided inside of the guiding ribs 29a, the one being cross-sectionally L-shaped and the other being inverted-L-shaped. Adjacent the guiding groove 29, there is provided a securing plate 42 (securing portion) having a bolt-insertion hole 42a.

As shown in FIGS. 1 and 6, there is provided a securing plate 43 (securing portion) 43 that includes bolt-insertion holes 43a each provided in the central portion of the plate-shaped portion 27 and the other side. By virtue of the securing portions 42, 43, the upper bracket 5 is firmly secured to the vehicle body (connection target).

As shown in FIGS. 2 and 3, when the upper bracket 5 is attached downward to the junction box body 2, the projection 30 (FIG. 6) of the upper bracket 5 goes beyond the projection 38 of the junction box body 2 to be brought into engagement therewith, and a vertically extending small gap is created between the two projections 30, 38 due to the overstroke. The junction box body 2 and accordingly the electrical junction box 1 may experience downward oscillation within the range of this gap, the projection 20 (FIG. 4) of the lower bracket 6 is only allowed to experience upward oscillation with respect to the projection 19 (FIG. 1) of the junction box body 2, and the projection 30 of the upper bracket 5 is only allowed to experience down2ward oscillation with respect to the projection 38 of the junction box body 2. Accordingly, the (upward and downward) oscillations are balanced and absorbed by each other, so that the upward/downward oscillation of the electrical junction box 2 is prevented.

Likewise, with regard to the fitting-engagement portions 13, 40 of the two brackets 5, 6, the projection 36 of the locking arm 35 (FIG. 6) of the upper bracket 6 goes downward beyond the connecting plate portion 22d of the plate portion 22 (FIG. 5) of the lower bracket 5 to be brought into engagement with the lower end surface 22c of the connecting plate portion 22d, a vertically extending small gap corresponding to the overstroke is created between the projection 36 (FIG. 7) and the lower end surface 22c (FIG. 5), and within the range of this gap, the electrical junction box 1 is allowed to experience downward oscillation. In cooperation with the above-described projection 30 (FIG. 6), oscillation absorption effects with respect to the lower bracket 5 are obtained uniformly at the diagonal points of the large upper bracket 5.

Thus, since the upper bracket 5 and the lower bracket 6 are each slidably brought into fitting engagement with the junction box body 2 in the opposite directions, and the junction box body 2 is sandwiched by the upper and lower brackets 5, 6, it is made possible to reliably prevent the oscillation of the junction box body 2 in the upward/downward direction.

As shown in FIG. 6, a plurality of rectangular protrusions 45 are provided at a desired locations at the lower end of the horizontal plate-shaped portion 27 of the upper bracket 5 in one piece therewith, and the upper bracket 5 contacts and presses via the protrusions 45 the horizontal upper wall surface 46 (the other surface in FIG. 1) of the junction box body 2, the upper wall surface 46 is bent downward, and the protrusion 45 as such is also bent (deformed) in the compression direction, so that it is elastically brought into abutment on the upper wall surface 46, and thus the upward oscillation of the electrical junction box 1 is prevented.

The plate-shaped portion 27 is not in contact with the upper wall surface 46 except for via the protrusion 45.

As shown in FIGS. 2 and 3, upward/downward oscillations of the electrical junction box 1 are reliably prevented by synergy between the fact that the insertion directions of the upper and lower brackets 5, 6 into the junction box body 2 are opposite to each other, and the presence of the protrusions 26, 45 of the upper and lower brackets 5, 6.

When the lower bracket 6 is completely attached to the lower wall surface of the junction box body 2 as shown in FIG. 2 and the upper bracket 5 is completely attached to the upper wall surface 46 of the junction box body 2 as indicated by the arrows B and C as shown in FIGS. 2 and 3, the upper bracket 5 is, simultaneously with this operation, brought into complete fitting engagement with the lower bracket 6 (in FIG. 3, the fitting-engagement portion of the two brackets 5, 6 are indicated by the reference sign D), as a result of which the assembly comprising the electrical junction box 1 and the brackets 5, 6 (indicated by the same reference sign 1) is constructed. Thus, it is made possible to firmly mount the electrical junction box 1 to the vehicle body without oscillation.

Although the electrical junction box 1 of the above-described embodiment is horizontally disposed, the electrical junction box 1 may be vertically disposed and let the two brackets prevent right-to-left oscillation or front-to-rear oscillation in place of vertical oscillations. Also, the electrical junction box 1 may be inverted so that the above-described lower bracket 6 serves as an upper bracket and the above-described upper bracket 5 as a lower bracket.

Also, in the above-described embodiment, the projections 19, 38 (FIG. 1) of the junction box body 2 is a protruding element adapted to connect the inner pair of ribs 14a, 37a laterally to each other, which is referred to as the projection. The projections 19, 38 of the junction box body 2 are generically referred to as the engaging portion. The projections 20, 30, 36 of the brackets and the connecting plate portion 22d of the plate portion 22 are generically referred to as the locking portion. The size and shape of the engaging portion and the locking portion may be defined and modified as required.

Further, in the above-described embodiment, shapes, numbers, and locations of the guiding portion of the junction box body 2, i.e., the guiding grooves 14, 37 (FIG. 1) and the guiding ribs 15, 39 (FIG. 1), along with the slide-engagement portion of the brackets, i.e., the slide-engagement grooves 18, 33 (FIGS. 4 and 6) and the slide-engagement ribs 17, 22a (FIGS. 4 and 5), may be defined and modified as required.

Also, the fitting-engagement portions 13, 40 (FIG. 1) of the two brackets 5, 6 may be provided upside down, i.e., the locking arm 35 (FIG. 6) may be provided on the lower bracket 6, and the plate portion 22 (FIG. 5) may be provided on the upper bracket 6.

### Industrial Applicability

The bracket structure in an electrical junction box of the present invention is industrially applicable to firmly secure an electrical junction box to a vehicle body without oscillation of the electrical junction box.

### Reference Signs

- 1: Electrical junction box
- 2: Junction box body
- 5: Upper bracket (the other bracket)
- 6: Lower bracket (one bracket)
- 19: Projection (first engagement portion)
- 20: Projection (locking portion)
- 22d: Connecting plate portion (second engagement portion)
- 26, 45: Protrusion
- 30: Projection (locking portion)
- 34: Flexible wall
- 35: Locking arm
- 36: Projection (second locking portion)
- 38: Projection (second engagement portion)
- 46: Upper wall surface (the other wide-width surface)

## Claims

1. A bracket structure in an electrical junction box (1), including:
a first bracket (6) configured to be attachable to one of a front and a back surface of a junction box body (2),
a second bracket (5) configured to be attachable to the other of the front and the back surface of the junction box body (2), and
the first bracket (6) and the second bracket (5) are brought into fitting engagement with each other upon attaching the first bracket to the one of the front and the back surface and attaching the second bracket to the other of the front and the back surface of the junction box body (2), wherein the first bracket is adapted to be slid toward the one of the front and the back surface in one direction and brought into fitting engagement with the junction box body, and the second bracket is adapted to be slid toward the other of the front and the back surface in an other direction opposite to the one direction and brought into fitting engagement with the junction box body, and
wherein the first bracket includes a first locking portion (20) adapted to go beyond a first engagement portion (19) of the junction box body in one direction such that the first locking portion of the first bracket is brought into engagement with the first engagement portion, and the second bracket includes a first locking portion (30) adapted to go beyond a second engagement portion (38) of the junction box body in the other direction such that the first locking portion of the second bracket is brought into engagement with the second engagement portion,
wherein the second bracket further includes a second locking portion (40) adapted to go beyond a second engagement portion (13) of the first bracket in one direction such that the second locking portion of the second bracket is brought into engagement with the second engagement portion of the first bracket.
wherein a portion (33) of the second locking portion (40) is pressed against the second engagement portion (13) of the first bracket by elasticity of a curved flexible wall (34), the portion (33) being pressed in a direction orthogonal to a fitting-engagement direction in which the brackets are brought into engagement with each other.

2. The bracket structure in the electrical junction box as set forth in any one of the preceding claims, wherein the first bracket further includes a protrusion (26) and the second bracket further includes a protrusion (45), and the first bracket and the second bracket are each adapted to be pressed against and in contact with the one of the front and the back surface and the other of the front and the back surface of the junction box body via the respective protrusion.

3. The bracket structure in the electrical junction box as set forth in any one of the preceding claims, wherein the electrical junction box comprises an upper cover (3) and a lower cover (4).

## Patentansprüche

1. Halterungsstruktur in einem elektrischen Anschlusskasten (1), umfassend:
einen ersten Halter (6), der zur Befestigung an eine vordere oder eine hintere Fläche eines Verteilerkastenkörpers (2) ausgebildet ist,
einen zweiten Halter (5), der zur Befestigung an der anderen der vorderen oder hinteren Fläche des Verteilerkastenkörpers (2) ausgebildet ist, und
wobei der erste Halter (6) und der zweite Halter (5) beim Befestigen des ersten Halters an die eine der vorderen und der hinteren Fläche und beim Befestigen des zweiten Halters an die andere der vorderen und der hinteren Fläche des Verteilerkastenkörpers (2) in Eingriff miteinander gebracht werden,
wobei der erste Halter eingerichtet ist, in Richtung der einen der vorderen und der hinteren Fläche in einer Richtung verschoben und mit der Verteilerkastenkörper in Eingriff gebracht zu werden, und der zweite Halter eingerichtet ist, in einer Richtung der anderen der vorderen und der hinteren Fläche in einer anderen Richtung, die der einen Richtung entgegengesetzt ist, verschoben und in Eingriff mit der Verteilerkastenkörper gebracht zu werden, und
wobei der erste Halter einen ersten Verriegelungsabschnitt (20) aufweist, der sich über einen ersten Eingriffsabschnitt (19) des Verteilerkastenkörpers in eine Richtung bewegt, so dass der erste Verriegelungsabschnitt des ersten Halters in Eingriff mit dem ersten Eingriffsabschnitt gebracht wird, und der zweite Halter einen ersten Verriegelungsabschnitt (30) aufweist, der sich über einen zweiten Eingriffsabschnitt (38) des Verteilerkastenkörpers in die andere Richtung bewegt, so dass der erste Verriegelungsabschnitt des zweiten Halters in Eingriff mit dem zweiten Eingriffsabschnitt gebracht wird,
wobei der zweite Halter ferner einen zweiten Verriegelungsabschnitt (40) aufweist, der sich über einen zweiten Eingriffsabschnitt (13) des ersten Halters in eine Richtung bewegt, so dass der zweite Verriegelungsabschnitt des zweiten Halters in Eingriff mit dem zweiten Eingriffsabschnitt des ersten Halters gebracht wird,
wobei ein Abschnitt (33) des zweiten Verriegelungsabschnitts (40) durch die Elastizität einer gekrümmten flexiblen Wand (34) gegen den zweiten Eingriffsabschnitt (13) des ersten Halters gedrückt wird, wobei der Abschnitt (33) in eine Richtung orthogonal zu einer Eingriffsrichtung, in der die Halter in Eingriff miteinander gebracht werden, gedrückt wird.

2. Halterungsstruktur in dem elektrischen Anschlusskasten gemäß einem der vorhergehenden Ansprüche, wobei der erste Halter ferner einen Vorsprung (26) umfasst und der zweite Halter ferner einen Vorsprung (45) umfasst, und der erste Halter und der zweite Halter jeweils ausgebildet sind, mithilfe des jeweiligen Vorsprungs gegen und in Kontakt mit der einen der vorderen und der hinteren Fläche und der anderen der vorderen und der hinteren Fläche des Verteilerkastenkörpers gedrückt zu werden.

3. Halterungsstruktur in dem elektrischen Anschlusskasten gemäß einem der vorhergehenden Ansprüche, wobei der elektrische Anschlusskasten eine obere Abdeckung (3) aufweist und eine untere Abdeckung (4) aufweist.

## Revendications

1. Structure de patte de fixation dans une boîte de raccordement électrique (1) incluant :
un premier support (6) configuré pour pouvoir être fixé à une surface parmi une surface avant et une surface arrière d'un corps de boîte de raccordement (2),
un second support (5) configuré pour pouvoir être fixé à l'autre surface de la surface avant et de la surface arrière du corps de boîte de raccordement (2), et
le premier support (6) et le second support (5) sont amenés en prise par ajustement l'un avec l'autre lors de la fixation du premier support à une de la surface avant et de la surface arrière et de la fixation du second support à l'autre de la surface avant et de la surface arrière du corps de boîte de raccordement (2),
dans laquelle le premier support est adapté à coulisser vers la première de la surface avant et de la surface arrière dans une direction et amené en prise par ajustement avec le corps de boîte de raccordement, et le second support est adapté à coulisser vers l'autre de la surface avant et de la surface arrière dans une autre direction opposée à la première direction et amené en prise par ajustement avec le corps de boîte de raccordement, et
dans laquelle le premier support comporte une première partie de verrouillage (20) adaptée à dépasser une première partie de mise en prise (19) du corps de boîte de raccordement dans une direction telle que la première partie de verrouillage du premier support est amenée en prise avec la première partie de mise en prise et le second support comporte une première partie de verrouillage (30) adaptée à dépasser une seconde partie de mise en prise (38) du corps de boîte de raccordement dans l'autre direction de sorte que la première partie de verrouillage du second support est amenée en prise avec la seconde partie de mise en prise,
dans laquelle le second support comporte en outre une seconde partie de verrouillage (40) adaptée à dépasser une seconde partie de mise en prise (13) du premier support dans une direction telle que la seconde partie de verrouillage du second support est amenée en prise avec la seconde partie de mise en prise du premier support,
dans laquelle une partie (33) de la seconde partie de verrouillage (40) est appuyée contre la seconde partie de mise en prise (13) du premier support par élasticité d'une paroi souple incurvée (34), la partie (33) étant appuyée dans une direction orthogonale à la direction de mise en prise par ajustement dans laquelle les supports sont amenés en prise entre eux.

2. Structure de patte de fixation dans une boîte de raccordement électrique selon l'une quelconque des revendications précédentes, dans laquelle le premier support comporte en outre une protubérance (26) et le second support comporte en outre une protubérance (45), et le premier support et le second support sont adaptés chacun à être appuyés avec une de la surface avant et de la surface arrière et en contact avec celle-ci et l'autre de la surface avant et de la surface arrière du corps de boîte de raccordement par l'intermédiaire de la protubérance respective.

3. Structure de patte de fixation dans une boîte de raccordement électrique selon l'une quelconque des revendications précédentes, dans laquelle la boîte de raccordement électrique comprend un couvercle supérieur (3) et un couvercle inférieur (4).
